# EUROPEAN PATENT APPLICATION

(11) **EP 3 779 878 A1**
(43) Date of publication of application: **17.02.2021**
(21) Application number: 19192090.9
(22) Date of filing: 16.08.2019
(51) Int. Cl.: G06T 7/30, G06T 7/55

(54) **METHOD AND DEVICE FOR COMBINING A TEXTURE WITH AN ARTIFICIAL OBJECT**

(71) Applicant: Siemens Aktiengesellschaft, 80333 München (DE)
(72) Inventor: Planche, Benjamin, 81539 München (DE); MacWilliams, Asa, 82256 Fürstenfeldbruck (DE)

(57) **Abstract**

The invention describes a method for combining a texture with an artificial object (M), comprising the steps:
- providing an artificial object (M),
- providing a number of digital pictures (P) of a reference object (O), comprising image-data (D) of the reference object (O),
- register the pictures (P) for the artificial object (M) with a SLAM algorithm (S) to form a point cloud (C) of the image-data (D),
- correcting the point cloud (C),
- aligning the point cloud (C) to the artificial object (M) .

The invention further describes a related device and an artificial object.

## Description

The invention describes a method and a device for combining a (real-appearing) texture with an artificial object, e.g. for augmented or virtual reality environments or for training machine learning algorithms.

Artificial objects become more and more important in many fields of information technology, technics and "normal" life. These artificial objects are not real objects, but exist as data in a computer environment. They are e.g. used for computer games or technical presentations on a screen, in augmented reality ("AR") or virtual reality ("VR"). To produce a good impression, it is desired that the texture of an artificial object has a lifelike appearance. The expression "texture" means here the attributes that determine how a surface is perceived by a human. Since it is the texture of an artificial object, this texture is a "texture dataset" combined with the artificial object.

One problem is, that it is very time consuming to render a "real looking" texture on an artificial object, what is pushing up the costs for the product (e.g. a computer game or a commercial VR-presentation).

Another aspect for the use or a real-appearing artificial object is machine learning. In the latest time, deep-learning-based methods are being more and more adopted by the industry given their great potential for robust recognition. However, deep-learning algorithms have to be extensively trained to work properly. The large datasets of relevant data they need for their training is a constraint often impossible to meet for scalable systems. For such use-cases and many others, synthetic models representing the target elements for this training. The advantage is that they are usually pre-available (e.g. by industrial 3D CAD blueprints, simulation models, etc.). It thus became common to leverage such data to train recognition methods e.g. by rendering huge datasets of relevant synthetic images and their annotations.

However, industrial 3D CAD models usually contain purely geometrical information only, leaving out details on materials and textures. As a result, one cannot render realistic synthetic images, and the salient discrepancies between the generated data and the target real pictures thus still heavily impairs the application of synthetically-trained algorithms to real data.

It is the object of the present invention to improve the known systems, devices and methods to facilitate an improvement in providing a (real appearing) texture for an artificial object. Especially, it is an object of the present invention to help the capture of texture information and their registration into an artificial object (e.g. a 3D-CAD model).

This object is achieved by a method according to claim 1, a device according to claim 12 and an artificial object according to claim 13.

A method according to the invention for combining a texture with an artificial object, i.e. the surface of the artificial (3D-CAD) object, wherein the artificial object is present as a dataset in a computer (preferably as CAD model, e.g. a 3D-CAD model). The texture is a texture information or a set of texture data and the expression pertains to data of attributes that determine how a surface is perceived by a human. These attributes are e.g. the color or the surface topography or "surface finish". Thus, the term "texture" also means information about the surface of a material. Although the optical attributes of the texture may be most important in praxis, also the haptic attributes are preferred in the course of the invention. This is the data concerning the surface topology (e.g. roughness, structures, lay and/or waviness) that can be applied to a user e.g. via a haptic data glove.

The method comprising the following steps:
- Providing an artificial object. This can e.g. be achieved by designing a CAD-model (i.e. the artificial object) with a CAD program and storing the information in a memory of a computer.
- Providing a number of digital pictures of a reference object, comprising image-data of the reference object. This reference object is preferably a real-world object, wherein it is preferred to take pictures from many different positions so that the reference object can be seen from different points of view. It is particularly preferred that the whole surface of the reference object (or at least more than 50% of its surface) is visible on the set of pictures. The pictures can e.g. be taken during scanning of a real object. Although in principal two pictures from different viewing angles could be enough, it is preferred that at least three, at least six or multiple pictures of the same reference object (from different viewing angles) are provided. It is an empiric formula that more pictures lead to a more accurate result and the number of pictures should be higher the more complex the shape of the reference object is.

It should be noted, that in the case the pictures originate from a real reference object that is scanned (since the CAD-model is artificially created) this reference object should have a similar shape as the CAD-model, at least partially.
- Register the pictures for the artificial object with a SLAM algorithm to form a point cloud of the image-data (in a virtual space). Registration (also known as "Image registration") is the process of transforming different sets of picture data into one coordinate system. Registration is advantageous in order to be able to compare or integrate the data obtained from different pictures. A SLAM algorithm (SLAM: "Simultaneous Localization And Mapping") is used to register the previous images into a common 3D (color) representation and produces a point cloud of the reference object that is seen in the pictures.

The origin of Simultaneous Localization And Mapping (SLAM) is navigation, where SLAM is the computational problem of constructing or updating a map of an unknown environment while simultaneously keeping track of an agent's location within it. According to the invention, a SLAM-Algorithm is used to reconstruct the appearance of an object from pictures of the reference object. The result of the SLAM-algorithm is a point cloud of pixels of the pictures in a 3D environment simulating the appearance of the reference object (see e.g. Slavcheva, Miroslava, et al. "SDF-2-SDF: highly accurate 3D object reconstruction." European Conference on Computer Vision. Springer, Cham, 2016.).
- Correcting the point cloud.

With a high probability, the point cloud would not optimally correspond to the artificial object. In addition, there may be some points of the point cloud (voxels in a 3D-space) assigned wrong. In order to optimize the point cloud, it is corrected manually and/or automatically by applying techniques known in image processing for altering the point cloud.
- Aligning the point cloud to the artificial object.

By projecting the aligned point-cloud onto the artificial object (e.g. a CAD representation), a texture map is created. The projection could e.g. be achieved in that certain voxels of the point cloud are assigned to vertices of the artificial object and preferably other voxels between the above certain voxels are assigned to surfaces of the artificial object between the respective vertices. It is preferred to interpolate missing data points if necessary. The aligning step can be combined with the correction step, where correct parts of the pint cloud are e.g. aligned with vertices of the artificial object or voxels of the point cloud are (pre-) aligned with vertices of the artificial object in order to correct them, e.g. by registering the voxels of the point cloud on the basis of the (pre-) aligned voxels.

Optionally there may be an additional projection and/or interpolation of the resulting data providing the image of an artificial model comprising an optimized texture.

The resulting artificial object together with the aligned point cloud could be designated as "textured object", since the aligned point cloud is the texture of the artificial object. The textured object could now be shown in a VR-environment (e.g. a game or presentation) or be used for training a deep-learning algorithm.

This method e.g. helps operators scanning objects and assigning a texture (and with this texture also relevant features) to their 3D representation in a virtual-reality (VR) environment. Such artificial object could especially be used to help the training of downstream recognition algorithms including object detection and tracking for augmented reality (AR) or industrial tasks or as-planned / as-built comparison, where real objects are compared to their planned CAD model to determine modifications or defects.

A device according to the invention for combining a texture with an artificial object, especially by performing a method according to one of the preceding claims, comprises the following components:
- A data interface designed to receive a number of digital pictures of a reference object, comprising image-data of the reference object, or a camera for taking digital pictures of a real object,
- a registration-unit designed to register the pictures for the artificial object with a SLAM algorithm to form a point cloud of the image-data,
- a correction unit designed to correct the point cloud,
- an aligning unit designed to align the point cloud to the artificial object.

An artificial object according to the invention comprising a texture produced by a method according to the invention. Since a SLAM algorithm arranges voxels in a typical way, there is a possibility to determine whether a SLAM algorithm had been used to generate a certain texture. However, since there are typical systematic errors caused by the SLAM-algorithm, a different arrangement of voxels that are typically positioned wrong by a SLAM algorithm indicate a correction. To obtain in the state of the art a 3D model of an object when no 3D CAD models are pre-available, one could use SLAM to build a color point cloud from images of that object, then use some algorithm to convert the point cloud into a 3D mesh as 3D CAD models have. The obtained 3D models typically have realistic textures, but rather coarse geometry due to the approximations of the SLAM algorithm and mesh-conversion algorithm that clearly differs from a CAD object constructed from elementary geometric shapes. Thus, according to the invention, the realistic textures obtained from SLAM are instead applied to a pre-available 3D CAD model which typically have a clean, precise and detailed 3D mesh. Or in short: One can see that a SLAM model is not created from basic geometric objects.

On the other hand, it is possible to tell apart textures which have been obtained through SLAM and textures e.g. created by computer graphics artists. SLAM textures are less precise, e.g., they are be a bit blurry due to SLAM approximations and interpolation of missing data, and sometimes contain noise from the capturing process, e.g. the texture may contain shadows projected onto the real object during the capture process.

Thus, due to the clear shapes of the object on the one hand and the slight blurry ness of the texture on the other hand, the artificial object according to the invention can be recognized.

Some units or modules of the device mentioned above can be completely or partially realized as software modules running on a processor of a computer. A realization largely in the form of software modules can have the advantage that applications already installed on an existing system can be updated, with relatively little effort, to install and run these units of the present application. The object of the invention is also achieved by a computer program product with a computer program that is directly loadable into the memory of a computer (e.g. a VR system), and which comprises program units to perform the steps of the inventive method when the program is executed by the computer. In addition to the computer program, such a computer program product can also comprise further parts such as documentation and/or additional components, also hardware components such as a hardware key (dongle etc.) to facilitate access to the software.

A computer readable medium such as a memory stick, a hard-disk or other transportable or permanently-installed carrier can serve to transport and/or to store the executable parts of the computer program product so that these can be read from a processor unit of a computer. A processor unit can comprise one or more microprocessors or their equivalents.

Particularly advantageous embodiments and features of the invention are given by the dependent claims, as revealed in the following description. Features of different claim categories may be combined as appropriate to give further embodiments not described herein.

According to a preferred embodiment, the method comprises the following steps in the course of correcting the point cloud:
- Displaying the obtained point cloud and the artificial object with a virtual reality device (the point cloud together with the artificial object, e.g. the point cloud surrounding the artificial object). Here the point cloud (that is a 3D point cloud generated by the above described SLAM algorithm) is selected and displayed together with the artificial object (e.g. a CAD model of the reference object) in a virtual environment so that a user can see the point cloud and the artificial object with the VR device. The visualization of the artificial object (e.g. the original CAD 3D model) and the reconstructed point cloud in virtual reality allows human operators to easily spot errors or missing elements in the point cloud (by moving around the representation), and to easily manipulate these structures e.g. to align them with the artificial object (again, using manual commands).
- Correcting the point cloud by a human operator.

This correction preferably comprises steps of the group rotating, scaling, translating, slicing and defining regions corresponding to unique materials (in order to build a material or texture catalogue which could be used to help interpolating the appearance of other objects) for at least a part of the point cloud. These actions are known in the field of image processing.

It is clear that a correction has always the goal to alter the point cloud in a way that it best superposes the representation of the artificial object (e.g. the CAD model). Simple virtual tools to manipulate 3D data (e.g. the above mentioned functions) could be controlled with a mouse, a keyboard or gesture interactions.

The user in the VR environment can preferably also indicate areas in which no texture should be reconstructed, e.g. because the captured point cloud data differs significantly from the artificial object. This can appear due to an artifact of the captured images (e.g. a person walks through the scene) or due to a difference between the as-planned CAD model and as-built real object. In the latter case, it is preferred that the user can also flag parts of the CAD model as inconsistent with reality, so that either the CAD model can later be modified, or the real object fixed.

According to a preferred embodiment, in the course of correcting the point cloud the method comprises the steps:
- Providing data of the point cloud and data of the artificial object in a common data space. Here the (3D) point cloud and the artificial object do not necessarily have to be shown (although the memory area for a graphical representation is also a common data space, and thus preferred for a combined user/automated correction). This step is advantageous to compare the point cloud and the artificial object.
- Correcting the point cloud by a machine learning algorithm trained to align data points of a point cloud with points of an artificial object (see e.g. Slavcheva, Miroslava, et al. "SDF-2-SDF: highly accurate 3D object reconstruction." European Conference on Computer Vision. Springer, Cham, 2016). Here an automated correction occurs. Since the correction is very complex, an AI-algorithm (a trained machine learning algorithm that could e.g. be a deep learning algorithm) is used for correction. With this correction, a pre-alignment occurs that can be used for aligning the point cloud with the artificial object.

This automatic correction could be performed parallel or in series of a manual correction as described above.

According to a preferred embodiment of the method, the correction comprises guiding new iterations of the SLAM algorithm. This could e.g. be achieved by looking at the point cloud and the artificial object in VR or by calculating a congruence parameter that determines the congruence of the outer shape of the artificial object and the shape of the point cloud. By changing parameters of the SLAM algorithm or by arranging the pictures in a different way for the SLAM-algorithm a resulting point cloud of the SLAM-algorithm could be altered. By comparing the point clouds of two different SLAM reconstructions with the artificial object, the better matching could be chosen.

Thus, it is preferred that for correction, coordinates of the artificial object and/or the digital pictures are altered, and the SLAM algorithm takes these altered coordinates as input to recreate an alternative point cloud. Thus, the operator or an automated process can guide the SLAM-algorithm to reconstruct the 3D point cloud, if the algorithm failed (i.e., if it is noticed that some images were not properly located with respect to the others). In that case, the operator or an automated process could reposition images in the 3D space (virtually indicating the viewpoint position), so the SLAM algorithm takes this information as input to recreate the 3D point cloud accordingly. The human operator or an automated process can observe the corrected point-cloud in near-real-time after repositioning some of the images.

According to a preferred embodiment of the method, the artificial object is used by the SLAM-algorithm to guide the SLAM-algorithm in its estimation of the positions of the reference object in the digital pictures.
Thus improving the accuracy of the reconstructed point cloud.

According to a preferred embodiment of the method, the artificial object is a CAD-model, preferably wherein the CAD model is a model of the reference object that has been created in a CAD program. This reference object could e.g. be scanned with a RGB camera or an RGB-D sensor (RGB-D: Color and distance) in order to obtain the texture, while preferably taking a series of images covering its surface. Thus, preferably, the provided pictures are taken while scanning the reference object.

For the sake of clarity, it is emphasized that a distinction should be made between the "CAD models" and the "reference models". The (3D) CAD models are (3D) models created using CAD (computer-aided design) applications like SolidEdge. It is often the case that exact (3D) models of manufactured real objects, e.g. prototypes, should be created. These CAD-models are created by designers in charge of designing new objects, or by engineers to guide the manufacturing process of said objects. One point of this invention is basically to use the texture information from the real model and transfer it to the precise CAD model.

The artificial object (being especially a CAD-model) is composed of exact geometrical shapes or mathematically-defined surfaces (e.g. Bezier curves). According to a preferred embodiment of the method, the artificial object is designed from basic geometric elements (or "geometric basic-shapes") from the group cuboid, torus, cylinder prism, wedge, cone and ellipsoid, or is defined by a surface comprising Bezier curves, triangles and/or other polygons. It is preferred that the artificial object is a discrete object and not a part of a bigger shape (such as e.g. a landscape). The artificial object should especially have a self-contained surface (e.g. be surrounded by void). Thus, the artificial object is entirely created by a user using a software, especially with no scanned data included.

According to a preferred embodiment of the method, in the step of registering the pictures for the artificial object, the pictures are registered on the artificial object, directly. Usually, SLAM methods only take for input sequences of images in order to build a point cloud. However, when (CAD) models of the reference objects are already available, a subset of these methods are able to leverage that information to generate a more precise point cloud.

According to a preferred embodiment of the method, in order to align the point cloud to the artificial object, the method comprises the steps of the group rotating, translating and scaling the artificial object and/or the point cloud. Preferably the user in the VR environment (see above), probably assisted with semi-automatic alignment algorithms, could enhance the alignment with his actions. This could be either a pre-alignment algorithm, which generates suggestions for possible alignments (and the user can choose one of them), or a fine-alignment algorithm such as ICP which refines a rough alignment that the user has created. Thus the user may correct and/or align the artificial object and the point cloud obtained from the pictures.

According to a preferred embodiment of the method, coordinates of points of the point cloud are existent as relative coordinates to coordinates of vertices of the artificial object before and/or after the step of registration or aligning.

According to a preferred embodiment of the method, during the aligning step, color values of the point cloud are directly projected onto the surface of the artificial object, by connecting points of the point cloud with the nearest vertices of the artificial object. It is preferred that areas of the artificial object (vertices or planes) that are not covered by the point cloud are assigned to a color that is extrapolated by the colors of the adjacent vertices. Relative to vertices color values can then be saved along the CAD 3D model, to be used by any state-of-the-art 3D rendering engines.

According to a preferred embodiment, the method comprises for alignment and/or correction one or more of the following steps. Especially, the used VR environment can provide multiple forms of the following interactions.
- Apply a two-handed scale/rotate/translate interaction, especially with two handheld controllers, that alters the entire artificial object.
- Apply a worldzoom feature in order to alter the displayed size of the artificial object and the point cloud. This is advantageous to let the user make himself and the VR world visually larger or smaller in order to align large or small objects.
- Apply a viewpoint-based approach that lets the user specify particular interesting viewpoints for detection from which the alignment and/or correction should be particularly accurate.
- Apply a multiple-correspondence approach that lets the user align multiple pairs of scanned points and their counterparts on the artificial object in sequence, and then run an optimizer to best fit all these alignments.

A preferred device additionally comprises a data interface for a virtual reality device or such virtual reality device, wherein this data interface is preferably designed to receive data from an input of a user (e.g. from a controller).

In a preferred system according to the invention, components of the device (or the whole device) are part of a data-network, wherein preferably the data-network and the device are in data-communication with each other, wherein the data-network preferably comprises parts of the internet and/or a cloud-based computing system, wherein preferably the device is realized in this cloud-based computing system. For example, the components of the device are part of a data-network, wherein preferably the data-network and the device are in communication with each other. Such a networked solution could be implemented via an internet platform and/or in a cloud-based computing system.

The method may also include elements of "cloud computing". In the technical field of "cloud computing", an IT infrastructure is provided over a data-network, e.g. a storage space or processing power and/or application software. The communication between the user and the "cloud" is achieved by means of data interfaces and/or data transmission protocols.

In the context of "cloud computing", in a preferred embodiment of the method according to the invention, provision of data via a data channel (for example a data-network) to a cloud takes place. This cloud includes a (remote) computing system, e.g. a computer cluster that typically does not include the user's local machine. This cloud can be made available by a user that uses the textured object or one that performs correction or aligning steps.

Within the scope of a preferred embodiment of the system according to the invention, the abovementioned units (data interface, registration-unit, correction unit, aligning unit) Are present on the cloud side. A preferred system further comprises, a local computing unit connected to the system via a data channel (e.g. a data-network). The local computing unit includes at least one data receiving interface to receive data. Moreover, it is preferred if the local computer additionally has a transmission interface in order to send data to the system.

Also the result of the invention (the data of the textured artificial object) can be used for reproducing the artificial object as a real object with a reproduction machine, e.g. a 3D-printer.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a block diagram of the process flow of a preferred method according to the invention,
Figure 2 shows a preferred embodiment of the method of the invention,
Figure 3 shows an example of a device according to the invention.

In the diagrams, like numbers refer to like objects throughout. Objects in the diagrams are not necessarily drawn to scale.

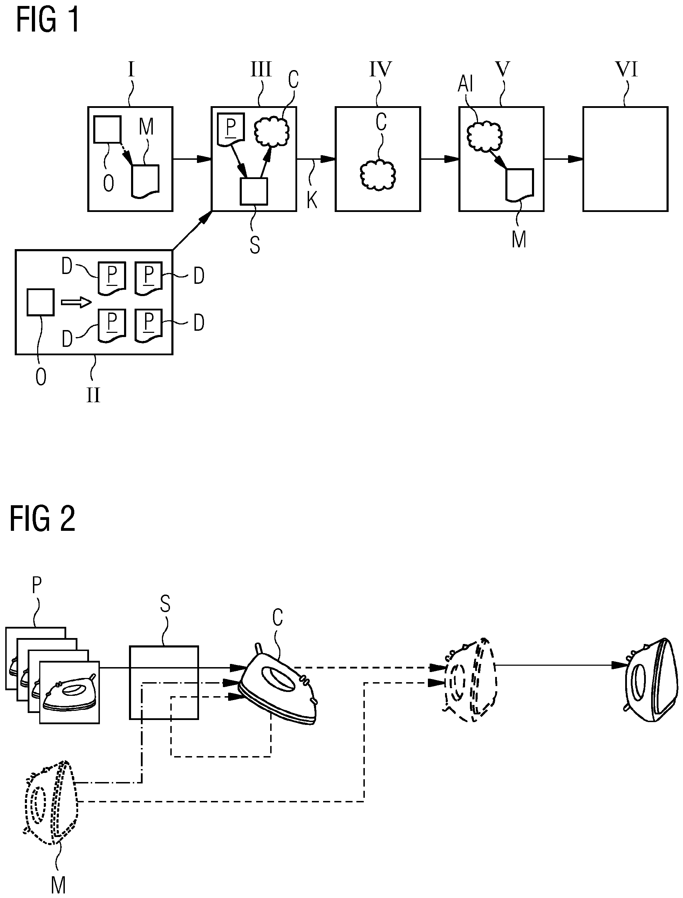

Figure 1 shows a block diagram of the process flow of a preferred method according to the invention for combining a texture with an artificial object.

In step I, an artificial object M is provided in form of a CAD model M in that a user creates it with a CAD program on a computer from basic geometric elements.

In step II, a number of digital pictures P of the reference object O is provided, comprising image-data D of the reference object O. The pictures P could be taken during a scan of a real object, but also on any other occasion, e.g. by filming a real object.

In step III, the pictures P of the artificial object O are registered with a SLAM-algorithm S to form a point cloud C of the image-data D. During that registration, the pictures P are preferably arranged in a data space in positions corresponding to the point of view, where the pictures P have been taken. After that, the SLAM-algorithm S reconstructs the reference object O.

In step IV, the point cloud C is corrected. This could be done manually by a user and/or automatically by an algorithm.

In step V, the point cloud C is aligned to the artificial object M. This could be achieved by aligning voxels of the point cloud C in a data space with vertices of the CAD model M.

In step VI, the resulting artificial object M together with the aligned point cloud C (that is now the texture of the artificial object that could now be designated as "textured object") is shown in a VR-environment or used for training a deep-learning algorithm.

Figure 2 shows a preferred embodiment of the method of the invention. Solid arrows show strict automated steps, dashed arrows indicate that there may be user interactions and/or automated interactions. First there is a multiplicity of pictures P of a reference object O on the one hand and a CAD model M of the reference object O on the other hand (shown left). The pictures P are then registered by a SLAM algorithm S, optionally by using the CAD model M as indicated with the dash-dotted arrow. This registration can be corrected by applying the SLAM algorithm S several times with amended parameters (e.g. arrangement of the pictures P). After that, the point cloud C resulting from the SLAM algorithm S and the CAD model M are aligned. After an optional projection and interpolation the result is a CAD-model M comprising an optimized texture.

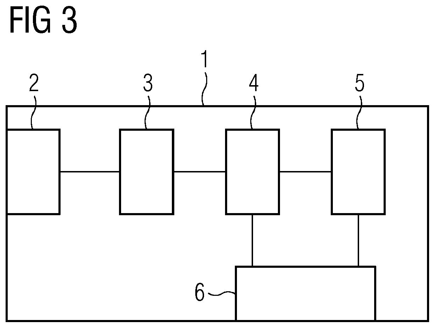

Figure 3 shows an example of a device 1 for combining a texture with an artificial object M according to the invention. The device comprises a data interface 2, a registration-unit 3, a correction unit 4 and an aligning unit 5. The data interface 2 is designed to receive a number of digital pictures P of a reference object O, comprising image-data D of the reference object O. It could also comprise or be a camera for taking digital pictures P of a reference object O. The registration-unit 3 is designed to register the pictures P for the artificial object M with a SLAM algorithm S to form a point cloud C of the image-data D. The correction unit 4 is designed to correct the point cloud C. The aligning unit 5 is designed to align the point cloud C to the artificial object M.

The device additionally comprises a data interface 6 for a virtual reality device, wherein this data interface 6 is designed to receive data from an input of a user (e.g. from a controller).

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements. The mention of a "unit" or a "device" does not preclude the use of more than one unit or device.

## Claims

1. A method for combining a texture with an artificial object (M), comprising the steps:
- providing an artificial object (M),
- providing a number of digital pictures (P) of a reference object (O), comprising image-data (D) of the reference object (O),
- register the pictures (P) for the artificial object (M) with a SLAM algorithm (S) to form a point cloud (C) of the image-data (D),
- correcting the point cloud (C),
- aligning the point cloud (C) to the artificial object (M) .

2. The method according to claim 1, wherein in the course of correcting the point cloud (C) the steps:
- displaying the obtained point cloud (C) and the artificial object (M) with a virtual reality device,
- correcting the point cloud (C) by a human operator, are applied,
preferably wherein the correction comprises steps of the group rotating, scaling, translating, slicing and defining regions corresponding to unique materials for at least a part of the point cloud (C).

3. The method according to one of the preceding claims, wherein in the course of correcting the point cloud (C) the steps:
- providing data of the point cloud (C) and data of the artificial object (M) in a common data space,
- correcting the point cloud (C) by a machine learning algorithm trained to align data points of a point cloud (C) with points of an artificial object (M)
are applied.

4. The method according to one of the preceding claims, wherein the correction comprises guiding new iterations of the SLAM algorithm (S),
preferably wherein coordinates of the artificial object (M) and/or the digital pictures (P) are altered, and the SLAM algorithm (S) takes these altered coordinates as input to recreate an alternative point cloud (C).

5. The method according to one of the preceding claims, wherein the artificial object (M) is used by the SLAM-algorithm to guide the SLAM-algorithm (S) in its estimation of the positions of the reference object (O) in the digital pictures (P).

6. The method according to one of the preceding claims, wherein the artificial object (M) is a CAD-model (M), preferably wherein the CAD model (M) is a model of the reference object (O) that has been created with a CAD program on a computer by a user from basic geometric elements,
wherein the provided pictures (P) are preferably taken while scanning the reference object (O).

7. The method according to one of the preceding claims, wherein the artificial object (M) is designed from basic geometric elements from the group cuboid, torus, cylinder prism, wedge, cone and ellipsoid, or is defined by a surface comprising Bezier curves, triangles and/or other polygons.

8. The method according to one of the preceding claims, wherein in the step of registering the pictures (P) for the artificial object (M), the pictures (P) are registered on the artificial object (M), directly.

9. The method according to one of the preceding claims, wherein in order to align the point cloud (C) to the artificial object (M) comprises the steps of the group rotating, translating and scaling the artificial object (M) and/or the point cloud (C).

10. The method according to one of the preceding claims, wherein during the aligning step, color values of the point cloud (C) are directly projected onto the surface of the artificial object (M), by connecting points of the point cloud (C) with the nearest vertices of the artificial object (M), preferably wherein areas of the artificial object (M) that are not covered by the point cloud (C) are assigned to a color that is extrapolated by the colors of the adjacent vertices.

11. The method according to one of the preceding claims, comprising for alignment and/or correction one or more of the following steps:
- apply a two-handed scale/rotate/translate interaction, especially with two handheld controllers, that alters the entire artificial object;
- apply a worldzoom feature in order to alter the displayed size of the artificial object (M) and the point cloud (C),
- apply a viewpoint-based approach that lets the user specify particular interesting viewpoints for detection from which the alignment and/or correction should be particularly accurate; or
- apply a multiple-correspondence approach that lets the user align multiple pairs of scanned points and their counterparts on the artificial object (M) in sequence, and then run an optimizer to best fit all these alignments.

12. A device (1) for combining a texture with an artificial object, especially by performing a method according to one of the preceding claims, comprising:
- a data interface (2) designed to receive a number of digital pictures (P) of a reference object (O), comprising image-data (D) of the reference object (O), or a camera for taking digital pictures (P) of an reference object (O),
- a registration-unit (3) designed to register the pictures (P) for the artificial object (M) with a SLAM algorithm (S) to form a point cloud (C) of the image-data (D),
- a correction unit (4) designed to correct the point cloud (C) ,
- an aligning unit (5) designed to align the point cloud (C) to the artificial object (M).

13. An artificial object (M) comprising a texture produced by a method according to one of claims 1 to 11.

14. A computer program product comprising a computer program that is directly loadable into a computing system, which comprises program elements for performing steps of the method according to any of claims 1 to 11 when the computer program is executed by the system.

15. A computer-readable medium on which is stored program elements that can be read and executed by a computer unit in order to perform steps of the method according to any of claims 1 to 11 when the program elements are executed by the computer unit.
